## Europäisches Patentamt

## European Patent Office

## Office européen des brevets

(11) Publication number: **0 075 405**
**B1**

# (12) EUROPEAN PATENT SPECIFICATION

(45) Date of publication of patent specification: **27.12.85**

(21) Application number: **82304623.0**

(22) Date of filing: **02.09.82**

(51) Int. Cl.⁴: **B 01 D 35/00,** B 01 D 29/00,
B 01 D 13/00, B 01 L 11/00

(54) Re-usable filter units with recoverable filter membranes.

(30) Priority: **16.09.81 US 302823**

(43) Date of publication of application:
**30.03.83 Bulletin 83/13**

(45) Publication of the grant of the patent:
**27.12.85 Bulletin 85/52**

(84) Designated Contracting States:
**BE CH DE FR GB IT LI LU NL SE**

(56) References cited:
**DE-A-2 753 864**
**DE-A-2 825 441**
**DE-A-2 848 404**
**DE-B-1 090 005**
**US-A-1 411 972**

(73) Proprietor: **SYBRON CORPORATION**
**1100 Midtown Tower**
**Rochester, NY 14604 (US)**

(72) Inventor: **Leoncavallo, Richard A.**
**22 Callingham Road**
**Pittsford New York 14534 (US)**

(74) Representative: **Oliver, Roy Edward et al**
**POLLAK MERCER & TENCH High Holborn House**
**52-54 High Holborn**
**London WC1V 6RY (GB)**

Courier Press, Leamington Spa, England.

## Description

The present invention relates to filtration units for laboratory use and is more particularly concerned with re-usable filtration units having recoverable filter membranes.

A variety of re-usable filter units are known in the art and are used in various laboratory operations where a sample of a liquid is filtered through a filter membrane. The filter membrane is then recovered so that the material collected on the membrane can be inspected or cultured, for instance.

Briefly, such re-usable units generally include an upper body for receiving the liquid to be filtered, a lower body for receiving the filtrate, an intermediate member for supporting the filter membrane and some means for locking these three components together and providing an airtight seal about the filter membrane.

Filtration units of the prior art employ various means for releasably assembling and locking the upper and lower bodies together. For example, in one version, the two bodies are threaded, so that one may be screwed into the other. Bayonet locks are also employed and still another version has the mating ends of the upper and lower bodies provided with magnets for holding them together.

In bayonet joint and screw-threaded attachments (and to some extent in magnetic attachments), one of the bodies must be rotated or twisted with respect to the other in order to assemble or disassemble the filter unit. Such an arrangement is not entirely satisfactory, as relative rotation, caused by moving one or another of the bodies during assembly or disassembly, may twist, bend or even tear the filter membrane. Damage to the membrane during assembly of the filter unit can result in poor filtration. Damage occurring during disassembly to remove the membrane can result in loss of some portion of the material filtered from the liquid. For these reasons, it is important and preferable for the upper and lower body members to be assembled in a manner which avoids application of a shearing or twisting force to the filter membrane and also for the filter membrane to be inserted and recovered in as flat a condition as possible.

DE—A—2 852 441 discloses a re-usable filter unit having a recoverable filter membrane and comprising an upper body with a lower outlet, for receiving liquid to be filtered, a lower body comprising a receptacle for filtrate and a liquid-permeable support for locating the filter membrane between the upper and lower bodies, the upper body of the unit having a dependent flange about its outlet and the lower body having an upstanding collar defining an open top, the support comprises a perforated plate releasably carried by the collar and a connector member engages the flange and the collar and draws the upper and lower bodies together without relative rotation, so that the plate is clamped between the collar and an internal shoulder upon the flange, a seal member associated with the collar, the shoulder and the plate providing an air-tight seal between them when the unit is assembled and ready for use.

Another disadvantage of known filter units is that the filter membrane is not easily removed from its support plate, particularly when the membrane has been firmly pressed against this plate, such as during vacuum filtration. For example, in some prior art units, the membrane support plate is fixed to the lower body and no provision is made for inserting a tool between the membrane and the support plate to facilitate peeling the membrane from the plate. In other prior art units, the support plate is removably located in a recess in either the upper or the lower body, which makes it difficult to separate the filter support plate from the surrounding structure.

The present invention provides an improved form of re-usable filter unit which can be used readily without causing the disadvantages mentioned.

According to this invention, a re-usable filter unit is provided, comprising a lower body forming a receptacle for filtrate and having an upstanding collar terminating in a circular rim portion defining an open top of the lower body, an upper body forming a reservoir for liquid to be filtered and having an inwardly-extending internal shoulder defining a lower outlet of the upper body and a dependent cylindrical flange disposed outwardly of and around the internal shoulder, a support plate located between the upper and lower bodies upon the circular rim portion for supporting a filter membrane on its upper surface, wherein the cylindrical flange has a retaining shoulder which extends radially outwardly of the lower end of the flange, the support plate is removably carried upon the circular rim portion, the upstanding collar has external threads and also an intermediate portion which extends into the flange so as to engage the inside surface of the flange as the upper and lower bodies are drawn axially together, and an internally-threaded rotatable locking ring is retained on the flange by the shoulder and is engageable with the external thread on the collar so as to draw the upper body into contact with the support plate and with the lower body in releasable clamping engagement without relative rotation of the upper and lower bodies.

In the unit of the present invention, the upper and lower body members of the filter unit are drawn axially together without rotating one member with respect to the other. Connecting the upper and lower body members together in this way clamps the support plate for the filter membrane between the two members. In a preferred embodiment, the support plate has a diameter which is larger than the collar so that, when the filter unit is disassembled, the support plate can be lifted manually from the collar, e.g. for inspection or removal of the filter membrane. Provision is also made for inserting a tool beneath the filter membrane, to facilitate its removal from the support plate.

In order that the invention may be fully understood, two preferred embodiments of filter units are described below by way of illustration in conjunction with the accompanying drawings, in which:

Figure 1 shows an elevational view of one form of filter unit of the invention;

Figure 2 shows a side elevational view on an enlarged scale, partly broken away and in section, of a portion of the filter unit shown in Figure 1;

Figure 3 shows a view similar to Figure 1 of another embodiment of the invention.

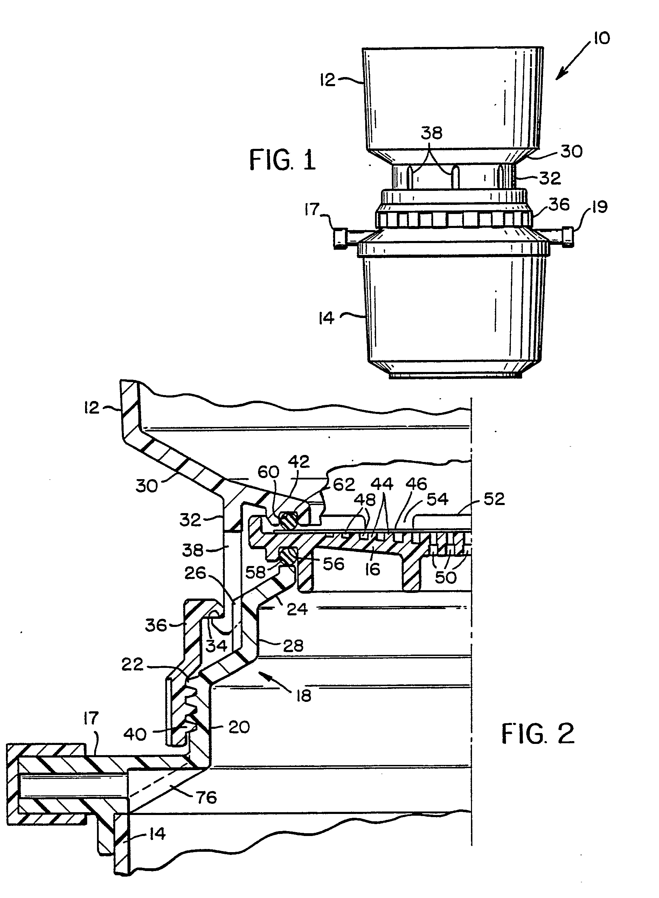

Figure 1 of the drawings shows a re-usable filter unit 10 according to the present invention, which includes a reservoir or upper body 12, for receiving a quantity of the liquid to be filtered, releasably joined to a receptacle or lower body 14 for receiving the filtrate. For convenience, both the upper and lower bodies 12, 14 are cylindrical and are made of an autoclavable and preferably transparent material, such as polycarbonate or polysulphone. Filter units commonly used in the art typically range in size up to 500 ml and have a filter membrane diameter of up to 50 ml.

It is also common to employ vacuum to aid in drawing the liquid through the filter membrane, shown at 46 in Fig. 2, and for this purpose, the lower body 14 is provided with a port 17 for connection to a vacuum line (not shown).

As shown in Figure 2, the lower body 14 has an annular collar generally indicated at 18. The lower portion 20 of this collar 18 has the largest diameter and is provided with an external screw thread 22. The uppermost portion 24 of the collar 18 has the smallest diameter and releasably carries a filter membrane support plate 16. This plate 16 is further described below.

The intermediate portion 28 of the collar 18 has an outside diameter which is between the diameters of the respective lower and upper portions 20, 24.

The upper body 12 has a necked portion 30. Depending from this necked portion is a split flange 32. The lower end of the split flange 32 has an external shoulder 34 which captures a locking ring 36 having an internal screw thread 40. Axial slots 38 provided about the split flange 32 permit contraction of the flange 32, so that the locking ring 36 may be pushed over the shoulder 34. When the flange 32 is allowed to expand back to its original configuration, the shoulder 34 captures the locking ring 36, as shown in Figure 2.

With this arrangement, the locking ring 36 can rotate with respect to the split flange 32 so that, when the locking ring 36 is threaded on to the lower portion 20 of the collar 18, the upper and lower bodies 12, 14 are drawn axially together without relative rotation.

If desired, axial ribs 26 can be moulded upon the intermediate portion 28 so as to align with the axial slots 38. The engagement of these ribs 26 with the slots 38 ensures that no twisting or rotation of the upper and lower bodies 12, 14 occurs as they are drawn together.

Formed integrally with the necked portion 30 is an internal shoulder 42, which serves to clamp the support plate 16 against the upper collar portion 24 when the upper and lower bodies 12, 14 are drawn axially together.

The support plate 16 has on its upper surface a plurality of upstanding projections 44. These projections 44 are spaced close together and provide support for the filter membrane 46 resting on and extending over the support plate 16. The spaces 48 between the projections 44 communicate with one another and so channel liquid passing through the filter membrane 46 to the central portion of the support plate 16. This central portion is provided with through openings 50 to permit the filtrate to fall into the lower body or receptacle 14.

Disposed about the outer periphery of the support plate 16 is an upstanding wall 52. This wall 52 increases the overall thickness of the suport plate 16 so as to facilitate manual grasping and lifting of the support plate 16 from the collar 18. Because this wall 52 surrounds the filter membrane 46, it is provided with several spaced openings 54 to facilitate removal of the filter membrane 46 from the support plate 16. In this respect, the openings 54 permit a user to insert tweezers or some other appropriate device into one of the spaces 48 beneath the filter membrane 46 in order to lift the membrane from the support plate 16.

The under surface of the support plate 16 is provided with an annular groove 56 for receiving an O-ring or other appropriate gasket 58. This gasket 58 provides a seal between the support plate 16 and the upper edge of the uppermost collar portion 24.

Completing the structure of the filter unit 10, as Figure 2 shows, the internal shoulder 42 is also provided with an annular groove 60 for receiving an O-ring or other appropriate gasket 62. This gasket 62 seats against the upper surface of the support plate 16 to provide an air-tight seal between the plate 16 and the upper body 12.

In use, the filter membrane 46 is placed on the support plate 16. The plate 16 and its gasket 58 are then located on the upper edge of the collar portion 24. To assemble the unit 10, the upper body 12 is simply placed on top of the collar 18 and the locking ring 36 is threaded on to the lower collar portion 20. Tightening the locking ring 36 draws the upper body portion 12 axially toward the lower body portion 14, so the internal shoulder 42 and its gasket 62 are pressed against the filter membrane 46 and the support plate 16 in order to clamp the support plate 16 against the upper edge of the collar portion 24. Since the upper body 12 is not rotated with respect to the filter membrane 46, the joining of the two body portions 12, 14 does not result in bending, folding, twisting or tearing of the membrane 46. Also, as the upper body portion 12 is tightened down against the lower body portion 14, the intermediate collar portion 28 extends into the split flange 32 and engages the inside surface of the flange 32. This engagement acts to provide a radial bearing support to prevent inward deflection of the split flange 32 and possible separation of the locking ring 36 from the shoulder 34 as the locking ring is tightened.

The liquid to be filtered is then placed in the upper body portion 12 and a vacuum line (not shown) is attached to the port 17 for evacuating the lower body portion 14. The seals provided by the gaskets 58 and 62 ensure that only liquid from the upper body portion 12 is drawn through the filter membrane 46 and that no air enters the lower body portion 14 around the internal shoulder 42 or over the collar 18.

When filtration is complete, the locking ring 36 is unscrewed and the body portion 12 is lifted from the collar 18. This exposes the entire outer periphery of the support plate 16, so that it can be manually grasped and removed. The material filtered from the liquid can then be examined or, if desired, the membrane 46 can be removed as described above, e.g. for microscopic examination or culturing of the material filtered from the liquid.

Should the user desire to recover only the filtrate collected in the lower body 14, this can be done without disassembly simply by pouring out the filtrate through the port 17. A second port 19 (Figure 1) formed on the other side of the lower body 14, normally closed during filtration, is opened so as to act as an air vent to allow quick discharge of the filtrate. In addition, the wall of the lower body portion 14 can be provided with a recess as shown at 76 to facilitate recovery of the filtrate by channelling it to the port 17.

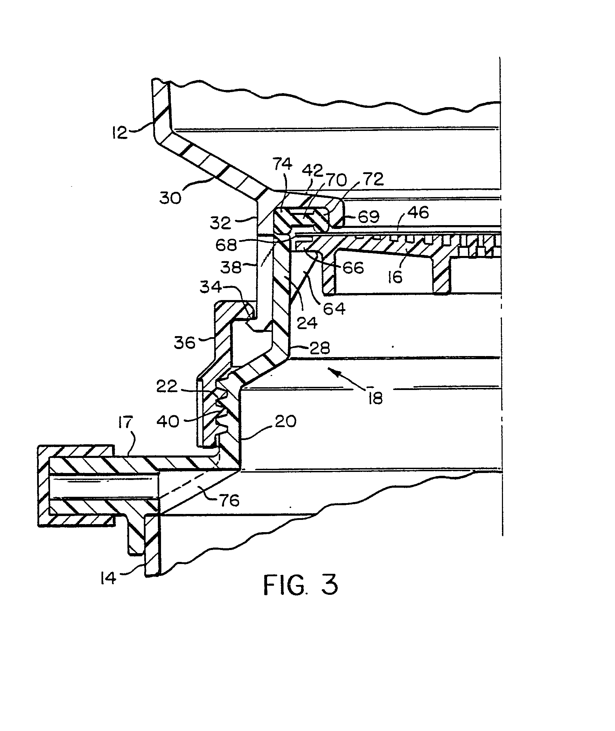

Referring now to Figure 3, another embodiment of the invention is shown, where many of the components of the filter unit are similar to those shown in Figure 2. Accordingly, the same reference numerals have been used where the parts referred to are the same as in Figure 2.

In the Figure 1 embodiment, as shown in Figure 2, the lower body 14 has the upstanding collar 18 but, in this embodiment, the upper and intermediate portions 24 and 28 of the collar have the same outside diameter. Accordingly, supporting contact for the split flange 32 is provided over a greater portion of the length of the split flange 32 as compared to the Figure 2 embodiment. Thus, the construction of the Figure 3 embodiment provides greater radial support for the split flange 32 than does the embodiment shown in Figure 2.

Formed about the inside diameter of the collar portion 24 are a plurality of support ribs 64 for receiving the support plate 16. In this respect, the outside diameter of the plate 16, in this embodiment, is less than the inside diameter of the collar 24, 28, so the plate 16 is supported within the collar on the ribs 64.

Also, in the Figure 3 embodiment, the upper surface of the plate 16 is recessed at its outer edge, so that the filter membrane 46 resting on the plate 26 overhangs the upper surface, as shown at 68. When the support plate 16 is removed from the filter unit 10, this construction allows the operator to insert one prong of a pair of tweezers or other suitable device beneath the edge of the filter membrane 46, in order to lift the membrane easily from the support plate 16.

In order to provide a seal between the support plate 16, the upper collar portion 24 and the split flange 32, the internal shoulder 42 of the upper body 12 extends inwardly from the flange 32 and has a downwardly turned lip 69. The space between this lip 69 and the flange 32 provides a seat for a gasket member 70 having a radial cross-section which is generally H-shaped. With a gasket of this form, one edge or leg 72 of the gasket 70 forms a seal between the flange 32 and the plate 16, while the other edge or leg 74 of the H-section gasket 70 forms a seal between the shoulder 32 and the upper edge of the collar portion 24.

While the embodiment shown in Figure 3 provides an alternative to that shown in Figure 2, it is not preferred because the recessed portion 66 of the support plate 16 makes it more difficult to remove the plate from the collar 18. In the Figure 2 embodiment, however, the support plate 16 merely rests on the upper edge of the collar portion 24, which makes it very easy simply to grasp and lift the support plate 16 from the collar 18.

To facilitate manufacture, the collar 18 and the lower body 14, can be made separately as by injection moulding, the port 17 being made integral with the collar 18, as shown in the drawings. The lower body portion 14 can then be attached to the collar 18 so as to form an integral unit, by any suitable joining technique such as sonic welding. In this way, the lower body portion 14 can be made in several configurations or sizes and then joined to a standard collar portion.

In any event, it should be appreciated that the invention provides a re-usable filter unit which greatly facilitates recovery of the filter membrane. The invention also reduces the risk of damage to the membrane when assembling the unit for use or when disassembling the unit to recover the membrane.

**Claims**

1. A re-usable filter unit, comprising a lower body (14) forming a receptacle for filtrate and having an upstanding collar (18) terminating in a circular rim portion (24) defining an open top of the lower body (14), an upper body (12) forming a reservoir for liquid to be filtered and having an inwardly-extending internal shoulder (42) defining a lower outlet of the upper body (12) and a dependent cylindrical flange (32) disposed outwardly of and around the internal shoulder (42), a support plate (16) located between the upper and lower bodies (12, 14) upon the circular rim portion (24) for supporting a filter membrane (46) on its upper surface, characterised in that the cylindrical flange (32) has a retaining shoulder (34) which extends radially outwardly of the lower end of the flange (32), the support plate (16) is removably carried upon the circular rim portion (24), the upstanding collar (18) has external threads (22) and also an intermediate portion (28) which extends into the flange (32) so as to engage the inside surface of the flange (32) as the upper and lower bodies (12, 14) are drawn axially together, and an internally-threaded (40) rotatable locking ring (36) is retained on the flange (32) by the shoulder (34) and is engageable with external threads (22) on the collar (18) so as to draw the upper body (12) into contact with the support plate (16) and with the lower body (14) in releasable clamping engagement without relative rotation of the upper and lower bodies (12, 14).

2. A filter unit according to claim 1, wherein the support plate (16) has a diameter greater than the collar (18) and its outer periphery overhangs the collar (18).

3. A filter unit according to claim 2, wherein the support plate (16) has a peripheral wall (52) in which spaced openings (54) are provided for allowing access to the surface of the plate beneath the filter membrane (46) when located thereon.

4. A filter unit according to claim 2 or 3, wherein the internal shoulder (42) includes a groove (60) holding a gasket (62) so as to bear against the upper surface of the plate (16).

5. A filter unit according to claim 2, 3 or 4, wherein the lower surface of the plate (16) includes a groove (56) having a diameter substantially equal to that of the collar (18) and a gasket (58) is located in the groove (56) so as to seat against the collar (18).

6. A filter unit according to claim 1, wherein the support plate (16) has an outside diameter smaller than the inside diameter of the collar (18), at least one internal rib (64) is provided on the collar (18) for engaging the periphery of and supporting the plate (16) in position within the collar (18) and a recessed portion (66) is provided in the upper surface of the plate (16) so as to extend about its periphery, so that a filter membrane (46) disposed on the upper surface overhangs the recessed portion (66) of the upper surface.

7. A filter unit according to claim 6, wherein the internal shoulder (42) extends inwardly from the flange (32) and has a down-turned portion (69) defining the upper body outlet, the flange (32) and the down-turned shoulder portion (69) defining a space which contains a gasket (70) extending across the recessed portion (66) of the plate (16), one edge (74) of the gasket (70) bearing against the collar (18) and the other edge (72) of the gasket (70) bearing against the upper surface of the plate (16).

8. A filter unit according to any preceding claim, wherein an axial rib (26) on the outer surface of the collar (18) extends into a corresponding axial slot (38) in the flange (32) so as to prevent relative rotation of the upper and lower bodies (12, 14) as they are drawn together.

9. A filter unit according to claim 8, wherein the circular rim portion (24) has a diameter smaller than that of the intermediate portion (28) and of the plate (16), whereby the plate (16) extends across the collar (18) and overhangs the circular rim portion (24).

## Revendications

1. Unité de filtration réutilisable, comprenant un corps inférieur (14) qui constitue un réceptacle pour le filtrat et comporte un collier en saillie vers le haut (18) se terminant par une partie rebord circulaire (24) qui délimite une ouverture supérieure du corps inférieur (14), un corps supérieur (12) qui constitue un réservoir pour le liquide à filtrer et présente un épaulement interne (42), s'étendant vers l'intérieur et délimitant un orifice de sortie du corps supérieur (12), et une bride cylindrique dirigée vers le bas (32), disposée à l'extérieur et autour de l'épaulement interne (42), ainsi qu'un plaque de support (16), placée entre les corps supérieur et inférieur (12, 14) sur la partie rebord circulaire (24), pour supporter une membrane filtrante (46) sur sa surface supérieur, caractérisée en ce que la bride cylindrique (32) comporte un épaulement de retenue (34) qui s'étend radialement vers l'extérieur à partir de l'extrémité inférieure de la bride (32), en ce que la plaque de support (16) est supportée de manière amovible sur la partie rebord circulaire (24), en ce que le collier en saillie vers le haut (18) comporte des filets extérieurs (22), ainsi qu'une partie intermédiaire (28) qui pénètre dans la bride (32) de manière à s'appliquer contre la surface intérieure de la bride (32) lorsque les corps supérieur et inférieur (12, 14) sont attirés axialement l'une vers l'autre, et en ce qu'un anneau de verrouillage rotatif (36) présentant un filetage intérieur (40) est retenu sur la bride (32) par l'épaulement (34) et peut être mis en prise avec les filets extérieurs (22) du collier (18), de manière à attirer le corps supérieur (12) au contact de la plaque de support (16) et du corps inférieur (14), en rapport de serrage amovible, sans rotation relative des corps supérieur et inférieur (12, 14).

2. Unité de filtration selon la revendication 1, caractérisée en ce que la plaque de support (16) a un diamètre plus grand que le collier (18) et son pourtour extérieur surplombe le collier (18).

3. Unité de filtration selon la revendication 2, caractérisée en ce que la plaque de support (16) comporte une paroi périphérique (52) dans laquelle sont formées des ouvertures espacées (54) pour donner accès à la surface de la plaque audessous de la membrane filtrante (46) lorsque cette dernière est placée sur cette surface.

4. Unité de filtration selon la revendication 2 ou 3, caractérisée en ce que l'épaulement interne (42) comporte une gorge (60) qui retient un joint d'étanchéité (62) de telle manière que celui-ci porte sur la surface supérieure de la plaque (16).

5. Unité de filtration selon l'une quelconque des revendications 2 à 4, caractérisée en ce que la surface inférieure de la plaque (16) comporte une gorge (56) dont le diamètre est sensiblement égal à celui du collier (18) et en ce qu'un joint d'étanchéité (58) est placé dans la gorge (56) de manière à porter contre le collier (18).

6. Unité de filtration selon la revendication 1, caractérisée en ce que la plaque de support (16) a un diamètre extérieur plus petit que le diamètre intérieur du collier (18), en ce qu'au moins une nervure intérieure (64) est formée sur le collier (18) pour prendre contact avec la périphérie de la plaque (16) et supporter celle-ci en place à l'intérieur du collier (18) et en ce qu'une partie en retrait (66) est formée dans la surface supérieure de la plaque (16) et s'étend le long de sa périphérie, de telle manière qu'une membrane filtrante (46), placée sur la surface supérieure, surplombe la partie en retrait (66) de la surface supérieure.

7. Unité de filtration selon la revendication 6, caractérisée en ce que l'épaulement interne (42) s'étend vers l'intérieur à partir de la bride (32) et comporte une partie rabattue vers le bas (69) qui délimite l'orifice de sortie du corps supérieur, la bride (32) et la partie de l'épaulement rabattue vers le bas (69) délimitant un espace libre qui reçoit un joint d'étanchéité (70) s'étendant d'un côté à l'autre de la partie en retrait (66) de la plaque (16), l'un des bords (74) du joint d'étanchéité (70) portant sur le collier (18) et l'autre bord (72) du joint d'étanchéité (70) portant sur la surface supérieure de la plaque (16).

8. Unité de filtration selon l'une quelconque des revendications 1 à 7, caractérisée en ce qu'une nervure axiale (26) sur la surface extérieure du collier (18) pénètre dans une fente axiale correspondante (38) formée dans la bride (32), de manière à empêcher une rotation relative des corps supérieur et inférieur (12, 14) lorsque ceux-ci sont attirés l'un vers l'autre.

9. Unité de filtration selon la revendication 8, caractérisée en ce que la partie rebord circulaire (24) a un diamètre plus petit que celui de la partie intermédiaire (28) et de la plaque (16), ce qui fait que la plaque (16) s'étend au-delà du collier (18) et surplombe la partie rebord circulaire (24).

**Patentansprüche**

1. Wiederverwendbare Filtereinheit mit einem unteren Teil (14), das einen Aufnahmebehälter für ein Filtrat bildet, mit einem stehend angeordneten Kragen (18), der in einem, ein offenes oberes Ende des unteren Teiles (14) bildenden, kreisförmigen Randabschnitt (24) endet, mit einem oberen Teil (12), das einen Aufnahmebehälter für eine zu filternde Flüssigkeit bildet und eine einwärts gerichtete, einen unteren Auslaß für das obere Teil (12) bildende Schulter (42) aufweist, mit einem sich nach unten erstreckenden zylindrischen Rand (32), der die Schulter (42) außen umgibt und einer Tragplatte (16), die auf dem kreisförmigen Randabschnitt (24) zwischen den oberen und unteren Teilen (12, 14) angeordnet ist und auf deren oberer Oberfläche eine Filtermembran (46) angeordnet ist, dadurch gekennzeichnet, daß der zylindrische Rand (32) eine sich radial von dessen unterem Ende nach außen erstreckende Rückhalteschulter (34) aufweist, daß die Tragplatte (16) lösbar auf dem kreisförmigen Randabschnitt (24) aufgelagert ist, daß der stehend angeordnete Kragen (18) einen äußeren Gewindeabschnitt (22) und ein Zwischenteil (28) aufweist, welches Zwischenteil (28) beim axialen Zusammenziehen der oberen und unteren Teile (12, 14) an der inneren Oberfläche des Randes (32) anliegt, daß ein mit einem Innengewinde (40) versehener, drehbarer Verschlußring (36) auf der Rückhalteschulter (34) des Randes (32) aufliegt und hierbei mit dem Gewindeabschnitt (22) des Kragens (18) im Eingriff steht, wobei ohne Relativbewegung des unteren gegenüber dem oberen Teil (12, 14) der obere Teil (12) mit der Tragplatte (16) und dem unteren Teil (12) in eine lösbare Klemmverbindung bringbar sind.

2. Wiederverwendbare Filtereinheit nach Anspruch 1, dadurch gekennzeichnet, daß die Trägerplatte (16) einen größeren Durchmesser als der Kragen (18) aufweist, so daß deren äußerer Umfangsbereich den Kragen (18) überragt.

3. Wiederverwendbare Filtereinheit nach Anspruch 2, dadurch gekennzeichnet, daß die Trägerplate (16) eine Umfangswandung (52) aufweist, in welcher sich mit Abstand voneinander angeordnete Öffnungen (54) befinden, über welche eine auf der Oberfläche der Trägerplatte (16) befindliche Filtermembran (46) zugänglich ist.

4. Wiederverwendbare Filtereinheit nach Anspruch 2 oder 3, dadurch gekennzeichnet, daß die Schulter (42) eine Rille (60) aufweist, in welcher eine an der oberen Oberfläche der Trägerplatte (16) anliegende Dichtung (62) angeordnet ist.

5. Wiederverwendbare Filtereinheit nach Anspruch 2, 3 oder 4, dadurch gekennzeichnet, daß in der unteren Oberfläche der Trägerplatte (16) eine Rille (56) angeordnet ist, deren Durchmesser im wesentlichen demjenigen des Kragens (18) entspricht und daß in der Rille (56) eine an dem Kragen (18) anliegende Dichtung (58) angeordnet ist.

6. Wiederverwendbare Filtereinheit nach Anspruch 1, dadurch gekennzeichnet, daß die Trägerplatte (16) einen Außendurchmesser aufweist, der kleiner ist als der Innendurchmesser des Kragens (18), daß an der Innernseite des Kragens (18) zur Unterstützung der Trägerplatte (16) wenigstens eine, deren Umfangsbereich tragende Rippe (64) angeformt ist, und daß in der oberen Oberfläche der Trägerplatte (16) entlang deren Umfanges ein ausgesparter Abschnitt (66) angeordnet ist, so daß eine auf der oberen Oberfläche der Trägerplatte (16) befindliche Filtermembran (46) den ausgesparten Abschnitt (66) überragt.

7. Wiederverwendbare Filtereinheit nach Anspruch 6, dadurch gekennzeichnet, daß sich die Schulter (42) ausgehend von dem Rand (32) einwärts erstreckt und einen nach unten verlaufenden, den Auslaß des oberen Teils (12) bestimmenden Schulterabschnitt (69) aufweist, daß der Rand (32) und der sich nach unten erstreckende Schulterabschnitt (69) einen eine Dichtung (70) aufnehmenden Raum bilden, der sich über den ausgesparten Abschnitt (66) der Trägerplatte (16) erstreckt, daß eine Kante (74) der Dichtung (70) an dem Kragen (18) und die andere Kante (72) der Dichtung (70) an der oberen Oberfläche der Trägerplatte (16) anliegt.

8. Wiederverwendbare Filtereinheit nach einem der vorangegangenen Ansprüche, dadurch gekennzeichnet, daß sich auf der äußeren Oberfläche des Kragens (18) eine sich axial erstreckende Rippe (26) befindet, welche zur Verhinderung einer relativen Drehung des oberen Teils (12) gegenüber dem unteren Teil (14) bei deren Montage mit einem entsprechenden, axial verlaufenden Schlitz (38) des Randes (32) in Eingriff bringbar ist.

9. Wiederverwendbare Filtereinheit nach Anspruch 8, dadurch gekennzeichnet, daß der kreisförmige Randabschnitt (24) einen kleineren Durchmesser aufweist, als der Zwischenabschnitt (28) und die Trägerplatte (16), so daß sich die Trägerplatte (16) über den Kragen (18) hinaus erstreckt und den kreisförmigen Randabschnitt (24) überragt.

0 075 405

FIG. 1

12

10

38
30
32
17
36
19
14

FIG. 2

12

30
42
60
62
44
46
54
52
32
48
38
16
56
50
26
58
24
36
34
28
22
18
17
20
40
76
14

FIG. 3